# EUROPEAN PATENT SPECIFICATION

(11) **EP 1 313 957 B1**
(45) Date of publication and mention of the grant of the patent: **16.11.2005**
(21) Application number: 01960949.4
(22) Date of filing: 24.08.2001
(51) Int. Cl.: F16B 19/08, B21J 15/04

(54) **SELF-PIERCING RIVET**
STANZNIET
RIVET AUTO-PER ANT

(30) Priority: 25.08.2000 GB 0020907
(43) Date of publication of application: 28.05.2003
(73) Proprietor: HENROB LIMITED, Deeside Industrial Park Flintshire CH5 2NX (GB)
(72) Inventor: CLARKE, Christopher James, Deeside Ind. Park, Flintshire CH5 2NX (GB)
(74) Representative: Every, David Aidan
(86) International application number: PCT/GB2001/003811
(87) International publication number: WO 2002/016785

(56) References cited:
- EP-A- 0 675 774
- WO-A-00/45056
- WO-A-95/35174
- DE-U- 29 509 439

## Description

The present invention relates to a seif-piercing rivet, and more particularly to a self-piercing rivet of the kind which is inserted into sheet material without full penetration such that a deformed end of the rivet remains encapsulated by an upset annulus of the sheet material.

Self-piercing rivets of the kind defined above, and methods and apparatus for inserting such rivets into sheet material are described in WO-A-94/14554; FR-A-2350901; EP-A-0172171 and EP-A-0129358.

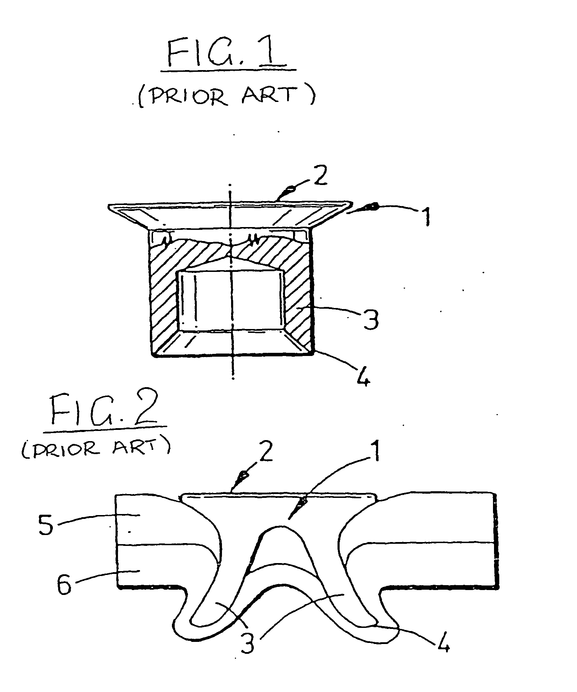

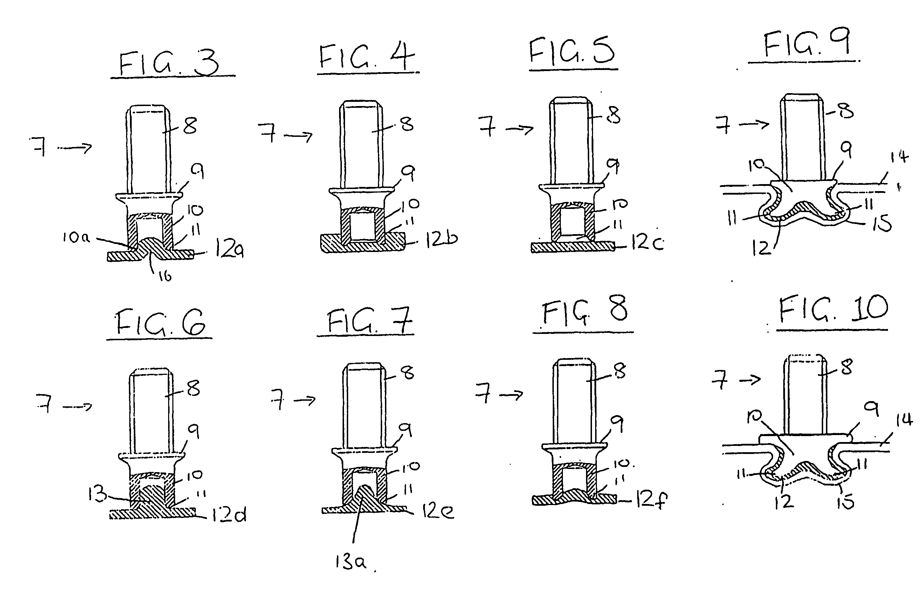

A known self-piercing rivet is illustrated in Figures 1 and 2 of the accompanying drawings. As shown in Figure 1, the rivets 1 have a head 2 and a cylindrical shank 3 that terminates in an annular edge 4. As the rivet is driven into two overlapping sheets of material 5, 6 over a suitably shaped die (not shown), the shank is caused to flare outwardly into the shape illustrated in Figure 2. The sheets of material 5, 6 are caused to deform around the shank, creating an annulus that encapsulates the shank. The shank 3 and edge 4 of the rivet remain embedded in the sheet material 5, 6 after the rivet has been set.

In use self-piercing rivets of the kind defined and shown in Figures 1 and 2 generally provide a satisfactory join if the sheets of material 5, 6 are sufficiently thick so as to allow the rivet shank 3 to deform evenly. However, if the sheets of material are very thin or a self-piercing rivet stud is inserted into a single sheet of material (to serve, for example, as an electrical earth stud), uneven rivet or sheet material deformation can occur. This results in poor joint quality in the finished article and may render the joint susceptible to failure or corrosion. Moreover, if the rivet penetrates the sheet or sheets the strength of the joint is affected and the joint is again vulnerable to corrosion.

WO95/35174 describes a self-piercing rivet insertion method in which a rivet with a deformable shank is inserted into sheet material such that a piercing end of the shank penetrates into the material and the shank is outwardly deformed in the finished joint.

It is an object of the present invention to obviate or mitigate the aforesaid disadvantages.

According to the present invention there is provided a self-piercing rivet for insertion into sheet material and comprising a main body with a deformable shank that has a piercing end characterised in that there is provided a portion of material or cap attached to the main body so as to cover the piercing end, the piercing end being adapted to pierce at least partially into the portion of material during insertion of the rivet.

The portion of material attached to the shank provides the rivet with a "cap" which deforms around the piercing end of the shank as the rivet is inserted into the sheet material in the same way as a top layer of sheet material would deform around the rivet in a conventional process. The cap thus serves as or simulates a top layer of sheet material and ensures that the piercing end of the rivet does not penetrate the sheet material into which it is inserted. The rivet can therefore be used to join very thin sheets of material, or in the case of a rivet stud, ensure insertion into a single sheet of material without penetration. The cap may be constructed of metal or plastics material and may be manufactured in many ways such as, for example, from sheet material, forged, diecast or turned, provided it is suitable for forming part of the riveted j joint.

It should be noted that the word "rivet" as used herein and in the claims is intended to cover both rivets and rivet studs (which have a projection extending from the rivet head). Other self-piercing fasteners such as, for example, tubular fasteners, bifurcated rivets, split rivets, or coining rings are also intended to be covered by the word "rivet".

The portion of material is preferably attached to the shank of the main body and preferably to the piercing end of the shank but may be attached at another point on the main body providing the cap is disposed so as to cover the piercing end.

The cap may extend outwardly of the piercing end in order to provide sufficient material so as to encapsulate the deformed piercing end of the shank in the finished joint. Encapsulation of the shank ensures a good quality of join or rivet stud placement. The piercing end of the shank may be received in a recess in the attached portion of material. Additionally or alternatively, the piercing end of the rivet may be partially inserted into the portion of material attached to the shank.

The portion of material may be attached to the shank by means of a press-fit or friction fit engagement or alternatively by a suitable bond.

In a further embodiment, the shank of the rivet is at least partially hollow and the attached portion of material has a projection that projects into the hollow interior of the shank. The projection may be in the form of an integral stud or nipple or may be provided by deforming the material out of its plane. The portion of material may be wholly or partially received in the interior of the shank

Embodiments of the present invention will now be described by way of example with reference to the accompanying drawings, in which:
Figure 1 is a part-sectioned view showing a prior art self-piercing rivet;
Figure 2 is a sectional view showing a riveted joint made using the self-piercing rivet of Figure 1;
Figure 3 is a part-sectioned view of a self-piercing rivet stud according to the present invention;
Figure 4 is a part-sectioned view of an alternative embodiment of the self-piercing rivet stud according to the present invention;
Figure 5 is a part-sectioned view of a third embodiment of the self-piercing rivet stud according to the present invention;
Figure 6 is a part-sectioned view of a fourth embodiment of the self-piercing rivet stud according to the present invention;
Figure 7 is a part-sectioned view of a fifth embodiment of the self-piercing rivet stud according to the present invention;
Figure 8 is a part-sectioned view of a sixth embodiment of the self-piercing rivet stud according to the present invention;
Figure 9 is a sectional view of the self-piercing rivet stud of any of Figures 3 to 8 inserted into a sheet of material;
Figure 10 is a sectional view of a seventh embodiment of the self-piercing rivet stud according to the present invention inserted into a sheet of material;
Figure 11 is a sectional view of an eighth embodiment of a self-piercing rivet of the present invention;
Figure 12 is a sectional view of a ninth embodiment of a self-piercing rivet of the present invention;
Figure 13 is a sectional view of a tenth embodiment of a self-piercing rivet of the present invention;
Figure 14 is a sectional view of an eleventh embodiment of a self-piercing rivet of the present invention; and
Figure 15 is a sectional view of a rivet of the present invention being used to join two sheets of material.

Referring to the drawings, the rivet of Figure 1 and the riveted joint of Figure 2 have already been described above with reference to the prior art.

Referring now to Figures 3 to 8, the invention is illustrated with reference to a rivet stud. It is to be appreciated that the invention has application to other rivet types. Each exemplary rivet stud 7 comprises a head 9, a hollow shank 10 and an upwardly directly threaded stud 8 projecting from the head 9. A piercing end of the shank 10 has an internal chamfer 10a so as to define a piercing edge 11. A cap 12 comprising a section of sheet material is secured at or near the piercing edge 11 so as to cover the piercing end of the shank 10. The cap 12 may be made of any appropriate material to suit the application such as, for example, metal. In addition, it may be coated with a material to suit the application.

Various configurations of the cap 12 are contemplated by the present invention. Six alternative cap 12 configurations are illustrated in Figures 3 to 8, although it should be appreciated that many more types of cap 12 are possible than those illustrated. Referring firstly to. Figure 3, cap 12a is formed of a flat piece of sheet material that is retained in the shank 10 by a deformation 16 out of the plane of the cap 12a that projects inwardly into the hollow of the shank 10.

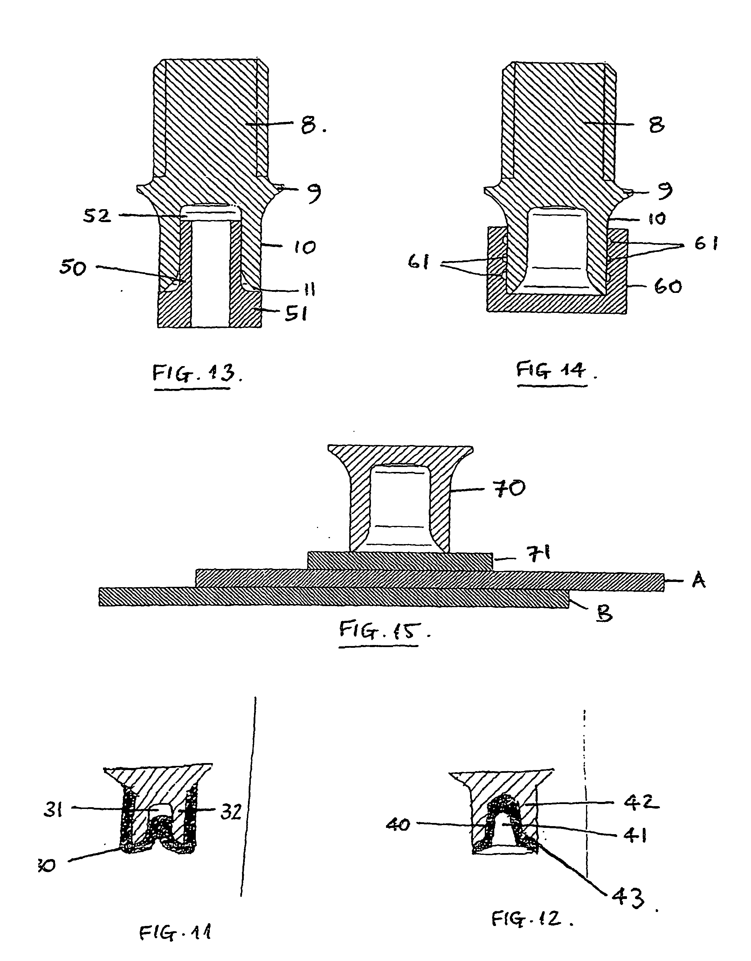

In the embodiment shown in Figure 4, the piercing end of the shank 10 is received in a recess in the cap 12b that is shaped so that it is a tight press-fit or friction-fit around the outside of shank 10. In Figure 5 there is shown a rivet stud 7 with a cap 12c that is formed of a flat piece of sheet material and is bonded to the piercing edge 11 by welding, gluing or other suitable means. In Figure 6, the rivet has a cap 12d of sheet material with an upstanding integral stud 13 that fits into shank 10 and fills much of the interior volume defined by the hollow of the shank 10. This allows the rivet stud 7 to be used with very thin sheets of material. In the embodiment of Figure 7, the cap 12e has an integral nipple 13a with a generally conical surface that projects into the interior of shank 10, the conical surface being concave between its apex and base. This shape promotes more even and wider flaring of the rivet when used with thin sheets of material. The rivet stud shown in Figure 8 has a cap 12f that is formed of a flat sheet of material and is attached to the rivet stud by partially inserting the piercing edge 11 of the shank into the cap 12f.

The caps 12a to 12f may be secured to the piercing end of the shank in any convenient way in addition to or as an alternative to those described.

A rivet stud as shown in any of Figures 3 to 8 is punched into a sheet of material using a known riveting apparatus and method, such as that described in WO-A-94/14554 or EP-A-0172171. Typically, a punch of the rivet setter apparatus (not shown) is extended from the body of the rivet setter under hydraulic pressure to apply an insertion force to the rivet or rivet stud so that it is driven into the sheet or sheets of material with the cap 12. In an alternative method the rivet may be inserted by a rivet setter that is powered by a servo-controlled electric actuator.

Figure 9 shows a rivet stud 7 of the present invention inserted into a single sheet of material 14. The shank 10 of the rivet stud has flared outwardly so as to deform both the cap 12 and the sheet material 14 into an encapsulating upset annulus 15. The cap 12 is wholly contained between the sheet of material 14 and the shank 10 and deforms around the rivet like a second or top layer of sheet material in a conventional riveting operation. The piercing edge 11 of rivet stud 7 is prevented from penetrating the sheet 14 by virtue of the cap 12 and the corrosion and weakness problems associated with the riveting of single or thin sheet material are significantly reduced or eliminated.

Figure 10 is a similar view to Figure 9, except that it illustrates a rivet stud 7 having a wider head 9 than that illustrated in Figures 3 to 9. This means that head 9 sits proud of the surface of material 14, which may be desirable in some applications.

The rivet of figure 11 shows an alternative embodiment of a rivet in which the cap 30 not only extends into the hollow part 31 of the rivet shank 32 but also extends over the exterior surface of the shank 32 so that it is contained within the general profile of the rivet. A variation of this design is shown in figure 12. In this embodiment the cap 40 is received within the hollow 41 of the rivet shank 42 and extends over the piercing edge 43. The cap 40 is thus received entirely within the rivet. The rivet designs of figures 11 and 12 enable existing rivet setting and handling equipment to be used without the need for adaptation thereof.

The cap may be in the form of a hollow cylinder 50 with a radially outward extending flange 51 at one end as shown in figure 13. The cylinder 50 is received in the hollow shank 52 of the rivet with the flange extending across the piercing edge 11 of the rivet.

The cap 60 may have annular grooves 61 in which an adhesive may be trapped as is shown in figure 14.

The embodiment of figure 15 shows a capped rivet 70 poised for insertion into two overlapping thin sheets A, B of material. The cap 71 in the form of a section of sheet material overlies the overlapped area and is pierced by the rivet during insertion as if it was another sheet of material.

The capped rivets may be used not only on a single sheet or a join in two thin sheets but also in applications where a lower thin sheet is being joined to a thicker upper sheet. The cap serves to prevent the rivet breaking through the lower sheet. It is also contemplated that they may be used in applications where the material being joined has variations in thickness.

It is to be appreciated that the present invention may be used with rivet configurations that are not shown in the accompanying drawings. In particular it is to be understood that the present invention may have application to rivets that do not have a hollow shank. Moreover, it is not necessary for the cap to be wholly contained within the riveted joint. In some applications the cap shape may be designed such that it has a secondary function in the finished product. For example, the cap may be formed such that, when joined to the sheet material it serves as a raised flange on the sheet as well as forming part of the riveted joint. The cap may have anti-rotation lugs or the like on its lower surface so that after insertion the lugs grip the upper surface of the sheet material so as to improve the torsional strength of the rivet.

## Claims

1. A self-piercing rivet (7, 70) for insertion into sheet material (14, A, B) and comprising a main body with a deformable shank (10) that has a piercing end (11) **characterised in that** there is provided a portion of material or cap (12, 30, 40, 50, 60, 71) attached to the main body so as to cover the piercing end, the piercing end being adapted to pierce at least partially into the portion of material during insertion of the rivet.

2. A self-piercing rivet according to claim 1, wherein the attached portion of the material (12, 30, 40, 50, 60, 71) is attached to the shank (10) of the main body.

3. A self-piercing rivet according to claim 2, wherein the attached portion of the material (12, 30, 40, 50, 60, 71) is attached to the piercing end (11) of the shank (10).

4. A self-piercing rivet according to claim 1, 2 or 3, wherein the attached portion of material (12, 30, 40, 50, 60, 71) extends outwardly of the piercing end (11).

5. A self-piercing rivet according to any one of claims 1 to 4, wherein the piercing end (11) of the shank (10) is received in a recess in the attached portion of material (12,30, 40,50,60,71).

6. A self-piercing rivet according to any one of claims **1** to **4**, wherein the portion of material (12, 30, 40, 50, 60, 71) is attached to the shank (10) by virtue of the piercing end (11) being partially inserted into said portion.

7. A self-piercing rivet according to any one of claim 1 to 6, wherein the attached portion of material (12, 30, 40, 50, 60, 71) is attached to the shank (10) by means of a press-fit or friction fit engagement.

8. A self-piercing rivet according to any one of claims 1 to 6, wherein the attached portion of material (12, 30, 40, 50, 60, 71) is attached to the shank (10) by a suitable bond.

9. A self-piercing rivet according to any previous claim, wherein the shank (10) of the rivet is at least partially hollow.

10. A self-piercing rivet according to claim 9, wherein the attached portion of material (12, 30, 40, 50, 60, 71) has a projection (13, 13a, 50) that projects into the hollow of the shank.

11. A self-piercing rivet according to claim 10, wherein the projection (13, 13a, 50) is in the form of an integral stud (13).

12. A self-piercing rivet according to claim 10, wherein the projection (13, 13a, 50) is in the form of an integral nipple (13a).

13. A self-piercing rivet according to claim 12, wherein the nipple (13a) has a generally conical profile.

14. A self-piercing rivet according to claim 13, wherein the conical profile of the portion of material (12, 30, 40, 50, 60, 71) is concave between its apex and its outer edge.

15. A self-piercing rivet according to claim 10, wherein the projection (13, 13a, 50) is provided by deforming part of the portion of material (12, 30, 40, 50, 60, 71) out of its plane.

16. A self-piercing rivet according to any preceding claim, wherein the rivet (7) is a rivet stud.

17. A self-piercing rivet according to any preceding claim, wherein the attached portion of material (12, 30, 40, 50, 60, 71), in use, forms part of the riveted joint.

18. A self-piercing rivet according to any preceding claim, wherein the attached portion of material (12, 30, 40, 50, 60, 71) is designed to provide a structural feature on the sheet material (14, A, B).

19. A self-piercing rivet according to claim 1, wherein the portion of material (12, 30, 40, 50, 60, 71) is adapted to deform around the shank (10) during insertion of the rivet into the sheet material (14, A, B) and is adapted to be encapsulated between the shank (10) and the sheet material in a finished riveted joint.

## Patentansprüche

1. Stanzniet (7, 70) zum Einsetzen in Flachmaterial (14, A, B) und umfassend einen Hauptkörper mit einem verformbaren Schaft (10), der ein Stanzende (11) hat, **dadurch gekennzeichnet, daß** ein Materialabschnitt oder eine Kappe (12, 30, 40, 50, 60, 71) bereitgestellt wird, an dem Hauptkörper so befestigt, daß das Stanzende bedeckt wird, wobei das Stanzende geeignet ist, während des Einsetzens des Niets wenigstens teilweise in den Materialabschnitt zu stanzen.

2. Stanzniet nach Anspruch 1, wobei der befestigte Materialabschnitt (12, 30, 40, 50, 60, 71) am Schaft (10) des Hauptkörpers befestigt ist.

3. Stanzniet nach Anspruch 2, wobei der befestigte Materialabschnitt (12, 30, 40, 50, 60, 71) am Stanzende (11) des Schafts (10) befestigt ist.

4. Stanzniet nach Anspruch 1, 2 oder 3, wobei sich, der befestigte Materialabschnitt (12,30,40, 50, 60, 71) vom Stanzende (11) nach außen erstreckt.

5. Stanzniet nach einem der Ansprüche 1 bis 4, wobei das Stanzende (11) des Schafts (10) in einer Aussparung im befestigten Materialabschnitt (12, 30, 40, 50, 60, 71) aufgenommen wird.

6. Stanzniet nach einem der Ansprüche 1 bis 4, wobei der befestigte Materialabschnitt (12, 30, 40, 50, 60, 71) auf Grund dessen am Schaft (10) befestigt ist, daß das Stanzende (11) teilweise in den Abschnitt eingesetzt ist.

7. Stanzniet nach einem der Ansprüche 1 bis 6, wobei der befestigte Materialabschnitt (12, 30, 40, 50, 60, 71) mit Hilfe einer Presspassung oder eines reibschlüssigen Eingriffs am Schaft (10) befestigt ist.

8. Stanzniet nach einem der Ansprüche 1 bis 6, wobei der befestigte Materialabschnitt (12, 30, 40, 50, 60, 71) durch eine geeignete Bindung am Schaft (10) befestigt ist.

9. Stanzniet nach einem der vorhergehenden Ansprüche, wobei der Schaft (10) des Niets wenigstens teilweise hohl ist.

10. Stanzniet nach Anspruch 9, wobei der befestigte Materialabschnitt (12, 30, 40, 50, 60, 71) einen Vorsprung (13, 13a, 50) hat, der in den Hohlraum des Schafts vorspringt.

11. Stanzniet nach Anspruch 10, wobei der Vorsprung (13, 13a, 50) die Form eines integralen Stollens (13) hat.

12. Stanzniet nach Anspruch 10, wobei der Vorsprung (13, 13a, 50) die Form eines integralen Nippels (13a) hat.

13. Stanzniet nach Anspruch 12, wobei der Nippel (13a) ein allgemein konisches Profil hat.

14. Stanzniet nach Anspruch 13, wobei das konische Profil des Materialabschnitts (12, 30, 40, 50, 60, 71) zwischen seinem Scheitel und seiner Außenkante konkav ist.

15. Stanzniet nach Anspruch 10, wobei der Vorsprung (13, 13a, 50) durch Verformen eines Teils des Materialabschnitts (12, 30, 40, 50, 60, 71) aus seiner Ebene bereitgestellt wird.

16. Stanzniet nach einem der vorhergehenden Ansprüche, wobei der Niet (7) ein Nietstollen ist.

17. Stanzniet nach einem der vorhergehenden Ansprüche, wobei der befestigte Materialabschnitt (12, 30, 40, 50, 60, 71) bei Anwendung einen Teil der genieteten Verbindung bildet.

18. Stanzniet nach einem der vorhergehenden Ansprüche, wobei der befestigte Materialabschnitt (12, 30, 40, 50, 60, 71) so gestaltet ist, daß er ein strukturelles Merkmal am Flachmaterial (14, A, B) bereitstellt.

19. Stanzniet nach Anspruch 1, wobei der Materialabschnitt (12, 30, 40, 50, 60, 71) geeignet ist, sich während des Einsetzens des Niets in das Flachmaterial (14, A, B) um den Schaft (10) zu verformen, und geeignet ist, bei einer abgeschlossenen genieteten Verbindung zwischen dem Schaft (10) und dem Flachmaterial eingekapselt zu sein.

## Revendications

1. Rivet perçant (7, 70) destiné à être inséré dans un matériau en feuille (14, A, B) et comprenant un corps principal avec une tige déformable (10) comportant une extrémité à percement (11), **caractérisé en ce qu'**une partie de matériau ou un capuchon (12, 30, 40. 50, 60, 71) est fixée sur le corps principal de sorte à recouvrir l'extrémité à percement, l'extrémité à percement étant destinée à percer au moins partiellement la partie du matériau au cours de l'insertion du rivet.

2. Rivet perçant selon la revendication 1, dans lequel la partie fixée de matériau (12, 30, 40, 50, 60, 71) est fixée sur la tige (10) du corps principal.

3. Rivet perçant selon la revendication 2, dans lequel la partie fixée de matériau (12, 30, 40, 50, 60, 71) est fixée sur l'extrémité à percement (11) de la tige (10).

4. Rivet perçant selon les revendications 1, 2 ou 3, dans lequel la partie fixée de matériau (12,30,40, 50, 60, 71) s'étend vers l'extérieur de l'extrémité à percement (11).

5. Rivet perçant selon l'une quelconque des revendications 1 à 4, dans lequel l'extrémité à percement (11) de la tige (10) est reçue dans un évidement dans la partie fixée de matériau (12, 30, 40, 50, 60, 71).

6. Rivet perçant selon l'une quelconque des revendications 1 à 4, dans lequel la partie fixée de matériau (12, 30, 40, 50, 60, 71) est fixée sur la tige (10) par insertion partielle de l'extrémité à percement (11) dans ladite partie.

7. Rivet perçant selon l'une quelconque des revendications 1 à 6, dans lequel la partie fixée de matériau (12, 30, 40, 50, 60, 71) est fixée sur la tige (10) par engagement par ajustement par pression ou par ajustement par frottement.

8. Rivet perçant selon l'une quelconque des revendications 1 à 6, dans lequel la partie fixée de matériau (12, 30, 40, 50, 60, 71) est fixée sur la tige (10) par une liaison appropriée.

9. Rivet perçant selon l'une quelconque des revendications précédentes, dans lequel la tige (10) du rivet est au moins partiellement creuse.

10. Rivet perçant selon la revendication 9, dans lequel la partie fixée de matériau (12, 30, 40, 50, 60, 71) comporte une saillie (13, 13a, 50) débordant dans la partie creuse de la tige.

11. Rivet perçant selon la revendication 10, dans lequel la saillie (13, 13a, 50) a la forme d'un goujon solidaire (13).

12. Rivet perçant selon la revendication 10, dans lequel la saillie (13, 13a, 50) a la forme d'un raccord solidaire (13a).

13. Rivet perçant selon la revendication 12, dans lequel le raccord (13a) a un profil généralement conique.

14. Rivet perçant selon la revendication 13, dans lequel le profil conique de la partie de matériau (12, 30, 40, 50, 60,71) est concave entre son sommet et son bord externe.

15. Rivet perçant selon la revendication 10, dans lequel la saillie (13, 13a, 50) est établie en déformant une partie de la partie de matériau (12, 30, 40, 50, 60, 71) hors de son plan.

16. Rivet perçant selon l'une quelconque des revendications précédentes, dans lequel le rivet (7) est un rivet à goujon.

17. Rivet perçant selon l'une quelconque des revendications précédentes, dans lequel la partie fixée de matériau (12, 30, 40, 50, 60, 71) fait partie en service de l'assemblage riveté.

18. Rivet perçant selon l'une quelconque des revendications précédentes, dans lequel la partie fixée de matériau (12, 30, 40, 50, 60, 71) est destinée à établir une structure structurale sur le matériau en feuille (14, A, B).

19. Rivet perçant selon la revendication 1, dans lequel la partie fixée de matériau (12, 30, 40, 50, 60, 71) est destinée à se déformer autour de la tige (10) au cours de l'insertion du rivet dans le matériau en feuille (14, A, B) et est destinée à être encapsulée entre la tige (10) et le matériau en feuille dans un assemblage riveté fini.
